# EUROPÄISCHE PATENTSCHRIFT

(11) **EP 0 589 257 B1**
(45) Veröffentlichungstag und Bekanntmachung des Hinweises auf die Patenterteilung: **05.03.1997**
(21) Anmeldenummer: 93114039.6
(22) Anmeldetag: 02.09.1993
(51) Int. Cl.: B65B 27/12, A01F 15/12

(54) **Ballenpresse, insbesondere zur Verdichtung von Verpackungsmaterial**
Baling press, in particular for compacting packaging materials
Presse à balles, notamment pour la compactage de matériaux d'emballage

(30) Priorität: 23.09.1992 DE 4231825
(43) Veröffentlichungstag der Anmeldung: 30.03.1994
(73) Patentinhaber: SQ Services AG, CH-3612 Steinhausen (CH)
(72) Erfinder: Wirth, Heinz, D-88085 Langenargen (DE)
(74) Vertreter: Patentanwälte Eisele, Otten & Roth

(56) Entgegenhaltungen:
- DE-B- 1 085 460
- DE-B- 1 222 423
- DE-B- 1 276 541

## Beschreibung

Die Erfindung betrifft eine Ballenpresse, insbesondere zur Verdichtung von Verpackungsmaterial, nach dem Oberbegriff des Anspruchs 1, wie z.B. aus DE-B-1 085 460 bekannt.

Zur raumsparenden Aufbewahrung sowie zum kostengünstigen Transport von Verpackungsmaterial wie Karton, Plastikfolien oder dgl. ist es üblich, das Material mittels einer Presse zu verdichten, um es in die Form eines dichtgepreßten Ballens zu bringen. Der Ballen wird in der Regel mit Verschnürungsmitteln wie Bändern oder Schnüren, die diesen umgürten, zusammengehalten.

Das Verschnürungsmittel, beispielsweise ein Band, muß also in der Verdichtungskammer einer Ballenpresse derartig angeordnet werden, daß nach dem Verdichtungsvorgang die beiden losen Enden des Bandes zugänglich sind, um diese miteinander zu verbinden, während der Stempel der Ballenpresse den Ballen zusammengepreßt hält.

Bekanntermaßen befinden sich bei herkömmlichen Bandpressen die Vorratsrollen für das Verschnürungsmittel auf der Hinterseite, d. h. der Verdichtungskammer abgewandten Seite des Stempels der Ballenpresse. Die Vorratsrollen sind hierbei in Bodennähe drehbar angeordnet. Die Bänder, Schnüre oder dgl. werden von den Vorratsrollen entlang dem Boden der Ballenpresse nach vorne geführt, wo an dem Stempel geeignete Nuten an seiner Unterseite angebracht sind. In diese Nuten hinein stehen üblicherweise die Ösen von sogenannten Bandhebern oder Ziehhaken, durch die die Bänder hindurchgeführt werden. Sie folgen im weiteren Verlauf dem Boden der Verdichtungskammer bis zu deren hinteren Auswurfsseite, wo sie über geeignete Umlenkmittel nach oben geführt werden. Das lose Ende des Verschnürungsmittels wird anschließend auf der Oberseite der Ballenpresse im Bereich der Auswurföffnung der Verdichtungskammer lösbar befestigt. Nach der Fertigstellung des Ballens verläuft das Verschnürungsmittel folglich bereits entlang seiner hinteren, der Auswurfsöffnung zugewandten Seite sowie entlang seiner Unterseite. Zur vollständigen Umreifung des Ballens muß nun das Verschnürungsmittel von der Unterseite des Stempels entlang seiner Druckfläche nach oben gezogen werden. Hierzu sind üblicherweise die Bandheber oder Ziehhaken im Stempel verschiebbar angeordnet. Nach dem Ziehen des Ziehhakens wird das Band in geeigneter Länge abgeschnitten und an der Oberseite des Ballens mit dem anderen losen Ende verknotet oder in sonstiger Weise geeignet verbunden, bevor der Stempel seinen Druck auf den Ballen verringert.

Eine Ballenpresse der genannten Art hat den Nachteil, daß die Ziehhaken häufig aufgrund des hohen Drucks, der auf der Druckfläche des Stempels lastet, nur sehr schwer zu ziehen sind. Falls mehrere Bänder oder Schnüre verwendet werden, wie das bei größeren Ballen immer der Fall ist, muß dieser schwierige Vorgang sogar mehrmals durchgeführt werden.

Außerdem befinden sich bei einer derartigen Ballenpresse die Vorratsrollen für das Verschnürungsmittel in einer ungünstigen tiefen Position. Dies hat zur Folge, daß sich auch die Arretierungsvorrichtung für das Verschnürungsmittel auf dieser Höhe befindet und somit für einen Bediener schwer zugänglich ist. Auch der Austausch der Vorratsrollen des Verschnürungsmittels gestaltet sich hierdurch sehr ungünstig.

Weiterhin sind z. B. mit der DE-B-1 085 460 oder der DE-B-1 276 541 Ballenpressen bekannt geworden, bei denen das Verschnürungsmittel im Bereich der Unterkante des Stempels auf dessen Vorderseite in einer lösbaren Führungsvorrichtung nach oben entlang der Vorderseite des Stempels umgelenkt und geführt ist.

In einer derartigen Ballenpresse wird das zu formende Material somit in jeder Phase bereits an drei Seiten von dem Verschnürungsmittel, beispielsweise einem Band,umgeben. Während des Vorrückens des Stempels läuft der Stempel quasi unter dem Band hindurch. Das Band gleitet während der Vorwärtsbewegung des Stempels an dessen Vorderseite nach oben und wird an dessen Oberseite in Richtung der Vorratsrollen umgelenkt. Es kann dabei fest vorgespannt verbleiben, da die Bewegung des Stempels die Bandlänge nicht verändert.

Die untere Führungsvorrichtung ist lösbar. Der Ballen ist nach dem Lösen der Führungsvorrichtung bereits an drei Seiten von dem Verschnürungsmittel umgeben. Dieses wird z. B. von den Vorratsrollen abgeschnitten und mit dem anderen losen Enden auf der Oberseite des Ballens verbunden.

Die DE-B-1 085 460 zeigt als untere lösbare Führungsvorrichtung Rollen, die um vertikale Achsen schwenkbar sind. Dieser Druckschrift sind keinerlei Hinweise zu entnehmen, wie beispielsweise mehrere Rollen mechanisch zum Ausschwenken gekoppelt werden können. Insbesondere die Schwierigkeit des Lösens der Rollen von den umlaufenden Verschnürungsmitteln bei dichtgepreßtem Ballen wird in keiner Weise angesprochen. Das Lösen dieser Rollen von den Verschnürungsmitteln bei unter Druck stehendem Druckstempel ist nur unter hohem Kraftaufwand möglich, da das gepreßte Material auch in die Führungsnuten des Durckstempels, in denen die Rollen gelagert sind, hineindrückt.

Die DE-B-1 276 541 beschreibt als untere Führungsvorrichtung eine rechenartige Halterung mit Führungsrollen an den Zinkenenden der Halterung. Zum Lösen der Rollen von dem Verschnürungsmittel wird diese Halterung vertikal aus der Presse herausgezogen. Das Ziehen dieser Halterung ist nur mit enormem Krafteinsatz möglich.

Der Erfindung liegt daher das Problem zugrunde, eine verbesserte Handhabung einer Ballenpresse zu ermöglichen und insbesondere eine große mechanische Krafteinwirkung zum Lösen der Frührungsrolle bzw. der Führungsrollen von dem Verschnürungsmittel zu verwirklichen.

Dieses Problem wird,ausgehend von einer Ballenpresse der einleitend genannten Art,durch die kennzeichnenden Merkmale des Anspruchs 1 gelöst.

Dementsprechend umfaßt eine erfindungsgemäße Ballenpresse einen Querträger, an dem die Führungsrolle bzw. die Führungsrollen angeordnet sind. Dieser Querträger ist seitlich verschiebbar. Zudem wird ein Hebel zur Betätigung vorgesehen, der durch entsprechende Anordnung des Drehpunkts im unteren, dem Querträger zugewandten Bereich die Ausnutzung eines Hebelverhältnisses ermöglicht.

Hierdurch wird die mechanische Krafteinwirkung, die bereits durch manuelle Betätigung des Hebels erzielt werden kann, deutlich erhöht, so daß auch eine einzige Bedienperson ohne weiteres mit einer einzigen Hebelbewegung die gesamte Führungsvorrichtung vom Verschnürungsmittel lösen kann. Zum Lösen der Führungsvorrichtung werden hierbei die Führungsrolle bzw. die Führungsrollen in seitlicher Richtung zwischen dem Verschnürungsmittel und dem vorliegenden Ballen herausgezogen.

Falls mehrere Bänder, Schnüre oder dergleichen zu führen sind, können diese über die entsprechende Anzahl von Rollen geführt werden, die auf dem seitlich verschiebbaren Querträger angebracht sind. Somit ist über den Querträger ohne weiteres bei Bedarf die mechanische Kopplung mehrerer Rollen in Bezug auf das Lösen von den Verschnürungsmitteln zu bewerkstelligen.

Durch die in den Unteransprüchen genannten Maßnahmen sind vorteilhafte Weiterbildungen und Ausführungen der Erfindung möglich.

Da das Verschnürungsmittel ohnehin an der Oberseite des Stempels vorliegt, empfiehlt es sich, eine oder mehrere Vorratsrollen im oberen Bereich der Ballenpresse anzuordnen. Hierdurch werden keine weiteren Umlenkvorrichtungen benötigt, und gleichzeitig wird die Zugänglichkeit der Vorratsrolle, bzw. Vorratsrollen erheblich erleichtert.

Damit der Ballen einwandfrei und straff umgürtet wird, muß das Verschnürungsmittel während des Pressvorgangs einigermaßen vorgespannt gehalten werden. Hierfür empfiehlt sich eine Arretierungsvorrichtung, die ein Abrollen des Verschnürungsmittels von der Vorratsrolle verhindert.

Als besonders geeignet hat sich hierfür eine exzentrisch gelagerte Anpreßwalze erwiesen, die das Verschnürungsmittel bei einer Drehung in Richtung der Zugbelastung des Verschnürungsmittels festklemmt.

Falls mehrere Bänder, Schnüre oder dgl. arretiert werden müssen, empfiehlt es sich, für jedes Band bzw. jede Schnur eine eigene Arretierungsvorrichtung vorzusehen. Hierdurch spielen die Toleranzen in der Lagerung und Dimensionierung der Anpreßwalzen sowie in der Stärke des Umschnürungsmittels keine Rolle mehr. Das Verklemmen findet in jedem Fall zuverlässig statt, wobei die exzentrisch gelagerten Anpreßwalzen in festgezurrtem Zustand unterschiedlich verdreht stehen können. Die Verklemmung wird individuell durch den Zug des Umschnürungsmittels bewirkt.

Ein Ausführungsbeispiel der Erfindung ist in der Zeichnung dargestellt und anhand der nachfolgenden Beschreibung näher erläutert.

Es zeigen
- Figur 1: eine perspektivische Darstellung einer erfindungsgemäßen Ballenpresse,
- Figur 2: einen Ausschnitt aus Figur 1 zur schematischen Verdeutlichung der Bandführung,
- Figur 3: die Hinterseite des Stempels und
- Figur 4: einen Teil eines Schnittes durch den Stempel entlang Linie IV in Figur 3.

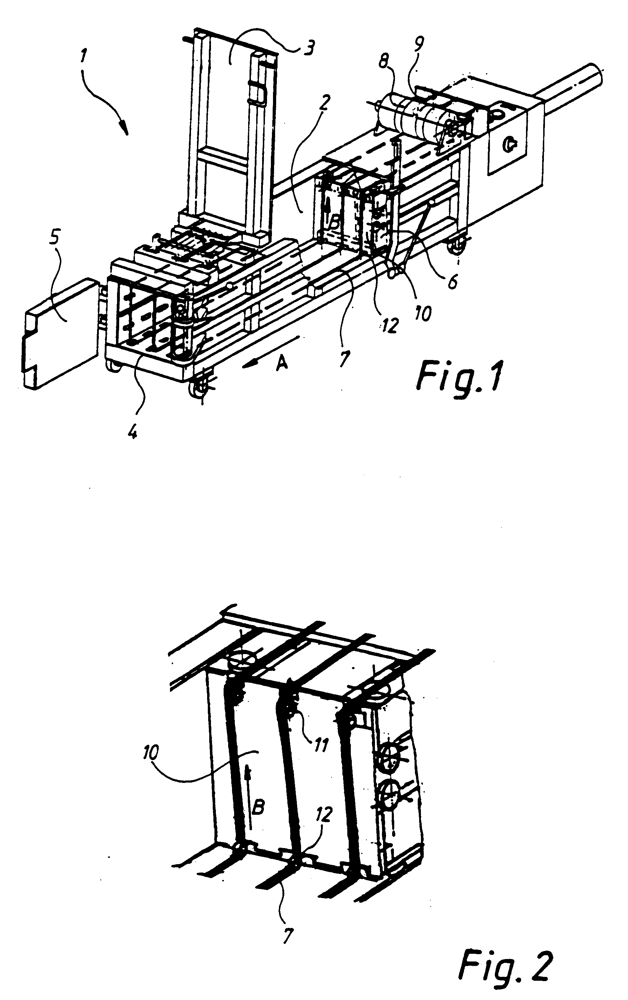

In Figur 1 ist eine Ballenpresse 1 mit teilweise aufgeschnittener Verdichtungskammer 2 dargestellt. Eine Füllklappe 3 ist nach oben hin geöffnet, während am vorderen Ende 4 der Ballenpresse eine Auswurfklappe 5 seitlich geschwenkt offensteht. Ein Stempel 6 befindet sich an der Hinterseite der Verdichtungskammer 2. Drei Bänder 7 sind in ihrem Verlauf so dargestellt, wie sie vor der Fertigung des Ballens vorliegen. Vorratsrollen 8 und die Bedienungshebel 9 für die Arretierungsvorrichtungen sind an der Oberseite der Ballenpresse 1 angebracht.

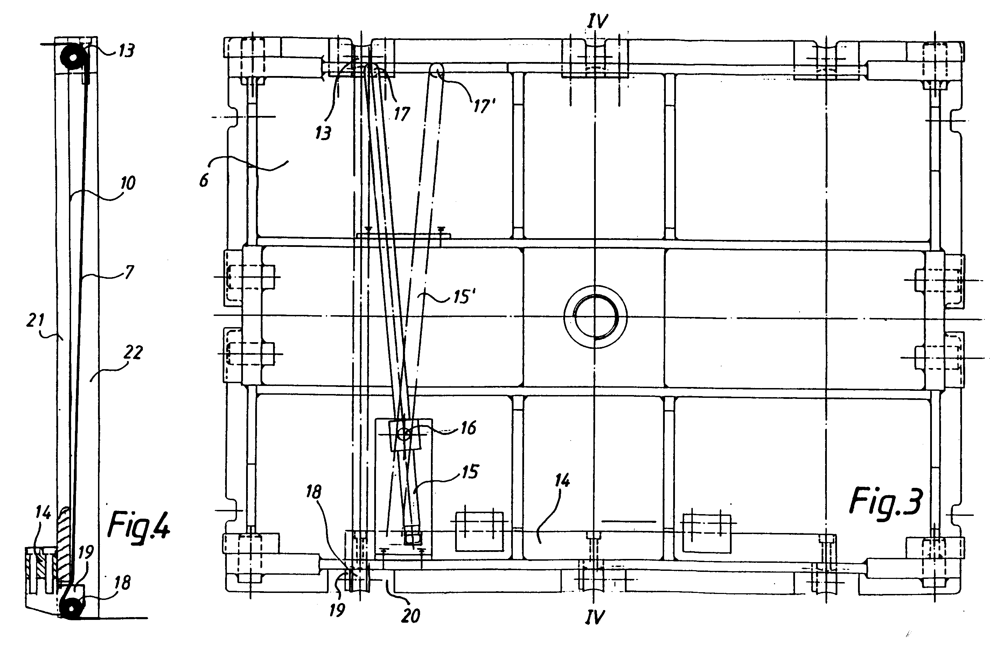

In Figur 2 ist der Verlauf der Bänder 7 entlang der Stempelvorderseite 10 dargestellt. Obere, feste Umlenkvorrichtungen 11 und untere, lösbare Umlenkvorrichtungen 12 sind in Figur 3 näher verdeutlicht.

Diese Figur zeigt eine Hinteransicht des Stempels 6. An der Oberseite des Stempels 6 befinden sich obere Rollen 13, die die oberen Umlenkvorrichtungen 11 bilden. Auf der Unterseite des Stempels 6 ist ein Querträger 14 dargestellt, der über einen Hebel 15 in Richtung des Doppelpfeils P verschiebbar ist. Aufgrund der Lage des Hebeldrehpunkts 16 wird der Kraftaufwand zur Betätigung des Hebels 16 an seinem Bedienungsende 17 verringert. Die unteren Rollen 18 sind nur an einer Seite an Lagerblechen 19 aufgehängt. Die Lagerbleche 19 sind fest mit dem Querträger 14 verbunden. Die Lagerbleche 19 sind so geformt, daß sie eine Nut 20 an der Unterseite des Stempels nach vornehin durchsetzen, so daß die Rollen 18 sich an der Stempelvorderseite befinden.

Diese Ausbildung der Lagerbleche 19 ist in Figur 4 deutlicher zu erkennen. Die untere Rolle 18 steht über die Vorderseite 10 der Vorderwand 21 des Stempels 6 hinaus. Außerdem ist in dieser Darstellung ein Vorsprung 22 dargestellt, der an beiden Seiten jeder Bandführung auf der Vorderseite 10 des Stempels 6 zu deren Schonung bei Druckbeaufschlagung angeordnet ist.

Zur Fertigung eines Ballens wird die Auswurfklappe 5 geschlossen und verriegelt. Anschließend wird das zu verdichtende Material durch die von der Füllklappe 3 freigegebene Öffnung in die Verdichtungskammer 2 eingefüllt. Im Anschluß daran wird der Stempel 6 in Richtung auf das vordere Ende 4 der Verdichtungskammer 2 (Pfeil A) in Bewegung gesetzt. Hierbei läuft er unter den Bändern 7 hindurch, die sich an seiner Vorderseite 10 in Pfeilrichtung B von unten nach oben bewegen. Nach der Fertigstellung des Ballens wird die nicht näher dargestellte Arretierungsvorrichtung der Bänder 7 mittels der Bedienungshebel 9 gelöst und die Bänder 7 in geeigneter Länge abgeschnitten. Nachdem die Bänder an der Oberseite des Ballens verknotet sind, werden über den Hebel 15 und den Querträger 14 die unteren Umlenkrollen 18 von den Bänder 7 gelöst. Diese schieben sich seitlich zwischen den Bändern 7 und dem nicht dargestellten Ballen heraus. Anschließend kann der Druck vom Stempel 6 genommen werden, die Auswurfklappe 5 geöffnet und der fertige Ballen ausgestoßen werden. Nach erneutem Einfädeln der Bänder 7 in die entsprechenden Umlenkvorrichtungen kann der gesamte Vorgang wiederholt werden.

## Patentansprüche

1. Ballenpresse, insbesondere zur Verdichtung von Verpackungsmaterial wie Karton, Plastikfolien oder dgl., mit einer Verdichtungskammer (2), einem Stempel (6) und mit wenigstens einem Verschnürungsmittel (7) wie Bänder, Schnüre, etc., wobei das Verschnürungsmittel (7) im Bereich der Unterkante des Stempels (6) auf dessen Vorderseite (10) in einer vom Verschnürungsmittel lösbaren Führungsvorrichtung (12) nach oben entlang der Vorderseite (10) des Stempels umgelenkt und geführt ist und die Führungsvorrichtung (12) wenigstens eine Rolle (18) umfaßt,
dadurch gekennzeichnet, daß die Rolle bzw. die Rollen an einem mittels eines Hebels (15) seitlich verschiebbaren Querträger (14) angebracht sind, wobei der Hebel (15) oberhalb des Querträgers (14) mit einem in seiner unteren, dem Querträger (14) zugewandten Hälfte befindlichen Drehpunkt (16) gelagert ist.

2. Ballenpresse nach Anspruch 1,
dadurch gekennzeichnet, daß das Verschnürungsmittel (7) auf einer Vorratsrolle (8) aufgerollt ist, die im oberen Bereich der Ballenpresse (1) drehbar angeordnet ist.

3. Ballenpresse nach einem der vorhergehenden Ansprüche,
dadurch gekennzeichnet, daß eine Arretierungsvorrichtung für das Verschnürungsmittel (7) vorhanden ist.

4. Ballenpresse nach Anspruch 3,
dadurch gekennzeichnet, daß die Arretierungsvorrichtung eine exzentrisch gelagerte Anpreßwalze umfaßt, die das Verschnürungsmittel (7) bei einer Drehung in Richtung der Zugbelastung des Verschnürungsmittels (7) festklemmt.

5. Ballenpresse nach einem der vorhergehenden Ansprüche
dadurch gekennzeichnet, daß mehrere Vorratsrollen (8) vorhanden sind und jeder Vorratsrolle (8) eine Arretierungsvorrichtung zugeordnet ist.

## Claims

1. Baling press, in particular for compacting packaging materials such as cardboard, plastic foils or the like, with a compacting chamber (2), a stamp (6) and at least one binding means (7), such as tape, cord etc. whereby the binding means (7) in the region of the lower edge of the stamp (6) on its front side (10) is moved and guided upwards in a guiding device (12) detachable from the binding means along the front side (10) of the stamp and the guiding device (12) comprises at least one roller (18), characterised in that the roller or the rollers are attached to a cross carrier (14) laterally displaceable by means of a lever (15), whereby the lever (15) is mounted above the cross carrier (14) with a point of rotation (16) located in its lower half facing the cross carrier (14).

2. Baling press according to claim 1, characterised in that the binding means (7) is rolled onto a supply roller (8) which is arranged rotatably in the upper region of the baling press (1).

3. Baling press according to one of the preceding claims, characterised in that a checking device is provided for the binding means (7).

4. Baling press according to claim 3, characterised in that the checking device comprises an eccentrically mounted press roller which clamps the binding means (7) on rotation in the direction of the pulling load of the binding means (7).

5. Baling press according to one of the preceding claims, characterised in that there are several supply rollers (8) and a checking device is assigned to each supply roller (8).

## Revendications

1. Presse à balles, en particulier pour le compactage de matériaux d'emballage, comme du carton, des feuilles en plastique ou analogues, comportant une chambre de compactage (2), un piston (6) et au moins un moyen de ficelage (7), comme des bandes, des ficelles, etc..., le moyen de ficelage (7) étant guidé et renvoyé dans la zone du bord inférieur du piston (6) sur sa face avant (10) dans un dispositif de guidage (12) détachable du moyen de ficelage vers le haut le long de la face avant (10) du piston, et le dispositif de guidage (12) comportant au moins un rouleau (18),
caractérisée en ce que le rouleau ou les rouleaux sont agencés sur une traverse (14) pouvant être déplacée latéralement au moyen d'un levier (15), le levier (15) étant monté au-dessus de la traverse (14) par un pivot (16) se trouvant dans sa moitié inférieure en regard de la traverse (14).

2. Presse à balles selon la revendication 1,
caractérisée en ce que le moyen de ficelage (7) est enroulé sur un rouleau de réserve (8), qui est agencé de façon rotative dans la zone supérieure de la presse à balles (1).

3. Presse à balles selon une des revendications précédentes,
caractérisée en ce qu'un dispositif de blocage pour le moyen de ficelage (7) est prévu.

4. Presse à balles selon la revendication 3,
caractérisée en ce que le dispositif de blocage comporte un rouleau de pressage monté de façon excentrique, qui bloque le moyen de ficelage (7) lors d'une rotation en direction de la charge de traction du moyen de ficelage (7).

5. Presse à balles selon une des revendications précédentes,
caractérisée en ce que plusieurs rouleaux de réserve (8) sont prévus, et un dispositif de blocage est associé à chaque rouleau de réserve (8).
